(19) Europäisches Patentamt
European Patent Office
Office européen des brevets

(11) **EP 3 142 429 B1**

(12) **EUROPEAN PATENT SPECIFICATION**

(45) Date of publication and mention
of the grant of the patent:
**05.06.2019 Bulletin 2019/23**

(21) Application number: **15789780.2**

(22) Date of filing: **30.04.2015**

(51) Int Cl.:
*H04W 52/34* (2009.01)  *H04W 16/32* (2009.01)
*H04W 52/38* (2009.01)  *H04W 72/04* (2009.01)
*H04W 52/14* (2009.01)  *H04L 5/00* (2006.01)
*H04W 52/36* (2009.01)  *H04W 74/08* (2009.01)
*H04W 76/34* (2018.01)  *H04W 76/15* (2018.01)
*H04W 52/40* (2009.01)  *H04W 52/50* (2009.01)
*H04W 52/28* (2009.01)

(86) International application number:
**PCT/JP2015/063019**

(87) International publication number:
**WO 2015/170667 (12.11.2015 Gazette 2015/45)**

(54) **USER DEVICE AND TRANSMISSION CONTROL METHOD**

BENUTZERVORRICHTUNG UND ÜBERTRAGUNGSSTEUERUNGSVERFAHREN

DISPOSITIF UTILISATEUR ET PROCÉDÉ DE GESTION D'ÉMISSIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.05.2014 JP 2014098139**

(43) Date of publication of application:
**15.03.2017 Bulletin 2017/11**

(73) Proprietor: **NTT DOCOMO, INC.**
**Chiyoda-ku**
**Tokyo 100-6150 (JP)**

(72) Inventors:
• **UCHINO, Tooru**
**Tokyo 100-6150 (JP)**
• **TESHIMA, Kunihiko**
**Tokyo 100-6150 (JP)**
• **TAKEDA, Kazuki**
**Tokyo 100-6150 (JP)**
• **NAGATA, Satoshi**
**Tokyo 100-6150 (JP)**

(74) Representative: **Hoffmann Eitle**
**Patent- und Rechtsanwälte PartmbB**
**Arabellastraße 30**
**81925 München (DE)**

(56) References cited:

WO-A1-2014/036734    JP-A- 2012 516 608

• NTT DOCOMO: "Outcome of the email discussion [76b-08] on TPC aspects of Dual Connectivity", 3GPP DRAFT; R1-141899, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Shenzhen, China; 20140331 - 20140404 6 May 2014 (2014-05-06), XP050814250, Retrieved from the Internet: URL:http://www.3gpp.org/ftp/tsg_ran/WG1_RL 1/TSGR1_76b/Docs/ [retrieved on 2014-05-06]
• LG ELECTRONICS: 'Power control for dual connectivity' 3GPP TSG RAN WG1 MEETING #76BIS , R1-141344 March 2014, XP050813805
• PANASONIC: 'Uplink transmission power management and PHR reporting for dual connectivity' 3GPP TSG RAN WG2 MEETING #84, R2-140477 09 February 2014, pages 1 - 3, XP050791832
• NTT DOCOMO: 'Outcome of offline discussion on TPC aspects of dual connectivity' 3GPP TSG RAN WG1 MEETING #76BIS, R1-141863 March 2014, pages 1 - 17, XP050814200
• NTT DOCOMO: 'Power -control mechanisms for dual connectivity' 3GPP TSG RAN WG1 MEETING #77, R1-142264 pages 1 - 8, XP050814726

**Description**

<u>TECHNICAL FIELD</u>

The present invention relates to transmission power control of a user apparatus UE in a mobile communication system such as LTE.

<u>BACKGROUND ART</u>

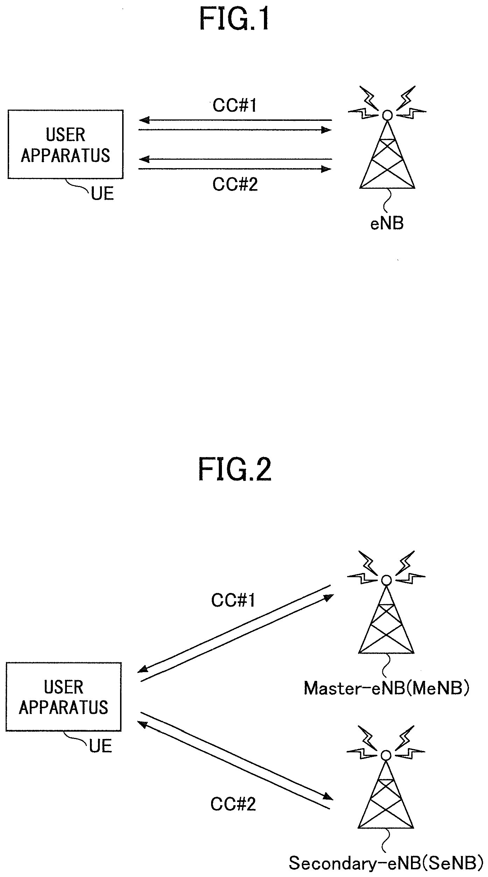

In an LTE system, carrier aggregation (CA, hereinafter) for performing communication by simultaneously using a plurality of carriers is adopted. As shown in Fig. 1, in CA up to Rel-11 of LTE, a plurality of CCs under the same base station eNB are used to perform simultaneous communication, so that high throughput can be realized.

On the other hand, in Rel-12, this is further expanded so that Dual connectivity is proposed in which simultaneous communication is performed by using CCs under different base stations eNB to realize high throughputs (non-patent document 1). That is, in Dual connectivity, the user apparatus UE performs communication simultaneously using radio resources of two physically different base stations eNB.

Dual connectivity (to be referred to as DC hereinafter) is a kind of CA, and it is also referred to as Inter eNB CA (inter-base station carrier aggregation), in which Master-eNB (MeNB) and Secondary-eNB (SeNB) are introduced. Fig. 2 shows an example of DC. In the example of Fig. 2, the MeNB communicates with the user apparatus UE by a CC#1, and the SeNB communicates with the user apparatus UE by a CC#2 so that DC is realized.

In DC, cell(s) (one or a plurality of cells) under an MeNB is called MCG (Master Cell Group), and cell(s) (one or a plurality of cells) under an SeNB is called SCG (Secondary Cell Group). A cell, of the SCG, that is added first is called PSCell (primary SCell).

<u>RELATED ART DOCUMENT</u>

[NON PATENT DOCUMENT]

[NON PATENT DOCUMENT 1] 3GPP TR 36.842 V12.0.0 (2013-12)
[NON PATENT DOCUMENT 2] 3GPP TS 36.321 V12.1.0 (2014-03)

The following documents provide further background to the invention.

WO 2014/036734 A1 describes measures for uplink configuration and transmission control in inter-site carrier aggregation. Such measures may exemplarily comprise measures for controlling configuration of a terminal device for an inter-site carrier aggregation mode, in which carriers from a macro cell and a micro cell are aggregated for uplink communication, with a configuration of up-link control information for the macro cell located at a first site and a configuration of uplink control information for the micro cell located at a second site, and/or measures for controlling transmission of a terminal device in the inter-site carrier aggregation mode with a handling of concurrent uplink transmissions at the terminal device.

3GPP contribution R1-141863 discusses TPC aspects of dual connectivity. In particular the following questions are discussed: Question 1: Is $P_{eNB}$ (maximum transmit power per CG/eNB) need to be defined? If no, how the maximum transmit power per CG/eNB is determined? If yes, what is the relationship among $P_{eNB}$, $P_{cmax}$, and $P_{cmax,c}$? Question 2: In unsync case, how to define the power-limited case? What is the definition of $P_{cmax}$ during partial overlap period? Question 3: Is it possible for UE to change the transmit power during subframe? Question 4: Is the additional processing time reduction (maximum close to 1ms) acceptable? Transmit power is largely affected by the contents of UL grant, in unsync case, due to the timing difference between eNBs, maximum 1ms additional processing time reduction may be needed.

3GPP contribution R1-141899 summarises the responses to the questions of R1-141863, as well as discussing the following additional questions: Question 7: Is Pcmax,c available in dual connectivity? Question 0: Is dynamic power-sharing between two CGs/eNBs necessary? If no, how to split the power to the eNBs semi-statically considering MeNB coverage? If yes, how to perform power-sharing between the two eNBs (considering RAN2 observations in R2-141848)? Question 3 (modified): Do UE need to take into account of power requirement of the other CG/eNB before allocating its available power for the first CG/eNB in the following two cases? Case 1) when the first eNB/CG is MeNB/MCG. Case 2) when the first eNB/CG is SeNB/SCG. Note: The first eNB/CG is the eNB/CG which is earlier in the timing.

## SUMMARY OF THE INVENTION

## PROBLEM TO BE SOLVED BY THE INVENTION

A problem to be solved by the present invention is related to UL transmission power control in DC described in the background art. Thus, outline of UL transmission power control of LTE is described first.

The transmission power by which the user apparatus UE transmits data to the base station eNB needs to be a proper size. Thus, the user apparatus UE calculates an UL transmission power using a predetermined function, to perform UL transmission using the calculated UL transmission power. In the following, an example of the predetermined function is shown for PUSCH. By the way, as to channels other than PUSCH, UL transmission power is calculated by a predetermined calculation equation.

$$P_{\text{PUSCH},c}(i) = \min\begin{Bmatrix} P_{\text{CMAX},c}(i), \\ 10\log_{10}(M_{\text{PUSCH},c}(i)) + P_{\text{O\_PUSCH},c}(j) + \alpha_c(j)\cdot PL_c + \Delta_{\text{TF},c}(i) + f_c(i) \end{Bmatrix}$$

(equation 1)

In the equation 1, $P_{\text{CMAX},c}(i)$ is the maximum transmission power of an i-th subframe of a serving cell c (after consideration of necessary power backoff), $M_{\text{PUSCH},C}(i)$ is the number of resource blocks, $\Delta_{\text{TF},c}$ is a power offset derived from MCS (Modulation Coding Scheme), $PL_c$ is a pathloss, and $f_c(i)$ is an accumulated TPC command. The others are broadcasted parameters.

The user apparatus UE inputs a resource amount assigned from the base station eNB, applying MCS and the like to the predetermined function to determine a transmission power and perform UL transmission. When the calculated transmission power exceeds the maximum transmission power, the user apparatus UE performs UL transmission by applying the maximum transmission power.

The base station eNB ascertains a transmission power of the user apparatus UE based on the above-mentioned equation 1 in order to perform power control and scheduling (resource assignment, MCS determination and the like) such that the transmission power of the user apparatus UE becomes a proper value. However, among variables in the above-mentioned equation 1, since the pathloss is unknown, the user apparatus UE transmits a PHR (power headroom report) including a PH (power headroom) to the base station eNB based on a predetermined trigger (example: when the pathloss changes), so that the base station eNB calculates a transmission power of the user apparatus UE based on the PHR.

The power headroom (PH) is a value calculated by the following equation 2, and it means a difference between the maximum transmission power and a calculated transmission power(transmission power where sticking to the maximum transmission power is not considered).

$$PH_{\text{type1},c}(i) = P_{\text{CMAX},c}(i) - \left\{ 10\log_{10}(M_{\text{PUSCH},c}(i)) + P_{\text{O\_PUSCH},c}(j) + \alpha_c(j)\cdot PL_c + \Delta_{\text{TF},c}(i) + f_c(i) \right\}$$

(equation 2)

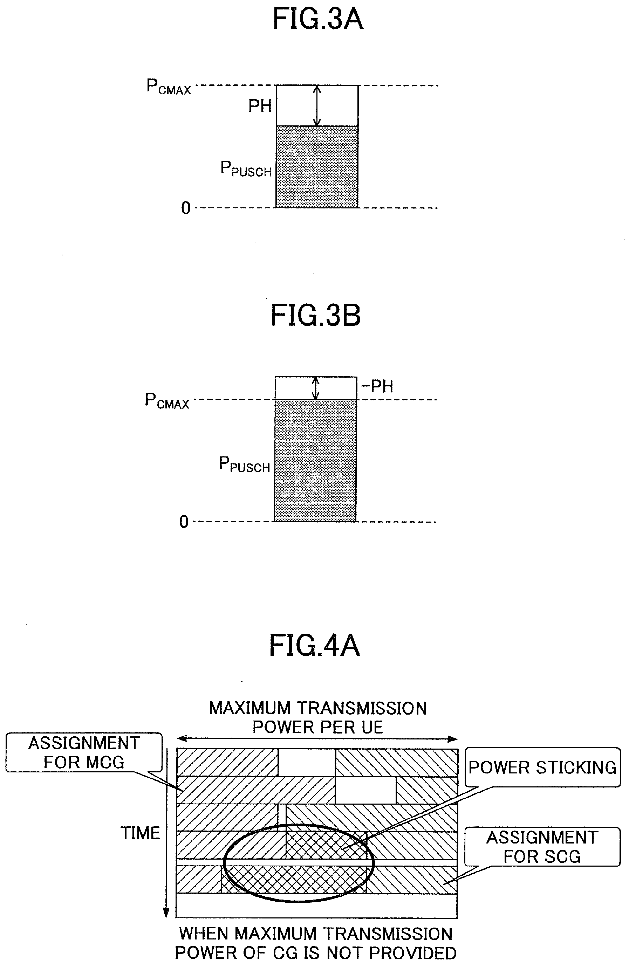

Fig. 3A and Fig. 3B are figures showing examples of PHs. Fig. 3A shows a case where the maximum transmission power is larger than the calculated transmission power, in which the PH becomes a positive value. Fig. 3B shows a case where the calculated transmission power is greater than the maximum transmission power. In this case, the actual transmission power becomes the maximum transmission power, in which the PH becomes a negative value.

In DC, a plurality of independent base stations eNB (MAC scheduler) performs UL resource assignment and TPC command control for the same user apparatus UE. Thus, transmission power easily sticks to the maximum value, and UL transmission cannot be performed properly, so that there is a possibility in that UL throughput deteriorates. However, each base station eNB cannot detect whether the power sticking is due to assignment by another base station eNB.

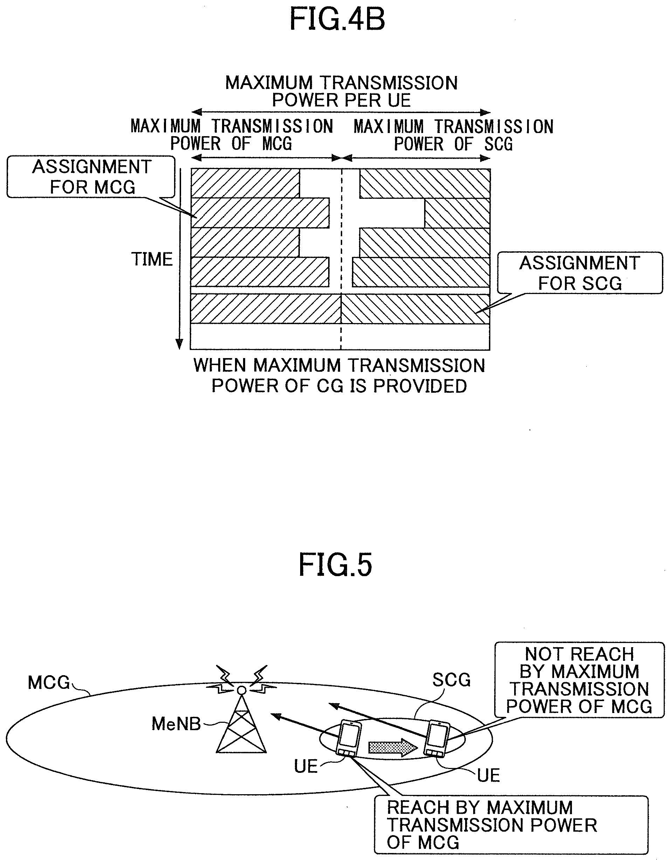

In view of such a point, as a transmission power control idea in DC, an idea of setting a maximum transmission power for each CG is being considered. This is described with reference to Figs. 4A and 4B. Fig. 4A is a diagram showing a change example of transmission power in the user apparatus UE when the maximum transmission power for each CG is not provided. As shown in Fig. 4A, the sum of transmission powers that are calculated independently for each of MCG and SCG exceeds the maximum transmission power, so that power sticking occurs frequently.

On the other hand, Fig. 4B is a diagram showing a change example of transmission power in the user apparatus UE when the maximum transmission power for each CG is provided. In this case, since each of the MeNB and the SeNB performs scheduling in consideration of the maximum transmission power of the MCG and the maximum transmission power of the SCG respectively, occurrence of power sticking decreases.

However, in a case where the transmission power value of the user apparatus UE is semistatically divided like the idea of Fig. 4B, the user apparatus UE cannot perform UL transmission by exceeding the maximum power per CG set for the MCG. Thus, there is a possibility in that important data (example: SRB (Signaling Radio Bearer) or voice) assumed to be transmitted by a serving cell of the MCG cannot be transmitted due to lack of transmission power (if transmitted, data does not reach the MeNB). Therefore, there is a problem in that there is a possibility that connectivity between UE and NW cannot be ensured, and an important service like voice cannot be provided stably.

As an example, as shown in Fig. 5, although a signal reaches the base station MeNB by the maximum transmission power of the MCG first, there is a case where a signal does not reach the base station MeNB by the maximum transmission power of the MCG due to move of the user apparatus UE. Especially, when UL SRB does not reach the base station MeNB, for example, measurement report cannot be transmitted, so that a problem occurs in which NW cannot properly trigger handover while following mobility of the user apparatus UE.

The present invention is contrived in view of the above-mentioned points, and an object of the present invention is to provide a technique to avoid that the user apparatus UE that performs DC cannot transmit an UL signal to the base station MeNB due to lack of transmission power.

## MEANS FOR SOLVING THE PROBLEM

The present invention provides a user apparatus and transmission control method as set out in the attached claims.

## EFFECT OF THE PRESENT INVENTION

According to an embodiment of the present invention, it becomes possible to avoid that the user apparatus UE that performs DC cannot transmit an UL signal to the base station MeNB due to lack of transmission power.

## BRIEF DESCRIPTION OF THE DRAWINGS

Fig. 1 is a diagram showing CA up to Rel-11;
Fig. 2 is a diagram showing an example of Dual Connectivity;
Fig. 3A is a diagram for explaining power headroom;
Fig. 3B is a diagram for explaining power headroom;
Fig. 4A shows an example of transmission power control in Dual Connectivity;
Fig. 4B shows an example of transmission power control in Dual Connectivity;
Fig. 5 is a diagram for expanding a problem;
Fig. 6 is a diagram showing a configuration example of a communication system in an embodiment of the present invention;
Fig. 7 is a diagram for explaining outline of an embodiment of the present invention;
Fig. 8 is a diagram for explaining power sticking when transmitting a specific channel;
Fig. 9 is a diagram showing PRACH transmission in a PCell in an MCG;
Fig. 10 is a diagram showing an example of an operation sequence in an embodiment of the present invention;
Fig. 11 is a diagram showing an example 1 of a format for transmitting a PHR;
Fig. 12 is a diagram showing an example 2 of a format for transmitting a PHR;
Fig. 13 is a diagram showing a configuration example in which two SCGs are configured;
Fig. 14 is a diagram for explaining a process procedure example when power sticking occurs in a case where two SCGs are configured;
Fig. 15 is a block diagram of a user apparatus UE;
Fig. 16 is a flowchart for explaining a basic operation example of the user apparatus UE.

## EMBODIMENTS FOR CARRYING OUT THE INVENTION

In the following, an embodiment of the present invention is described with reference to figures. The embodiment described below is merely an example, and the embodiment to which the present invention is applied is not limited to the embodiment below. Although it is assumed that the communication system of the present embodiment supports LTE, the present invention can be applied not only to LTE but also to other schemes. Also, in the specification and the claims, the term "LTE" is used to mean Rel-12 of 3GPP, or schemes after Rel-12 unless otherwise stated.

Also, in the following description, "cell" such as PCell, SCell and the like may be considered to be synonymous with a component carrier (CC) that forms the cell.

Also, in the following, as an example, an embodiment is described for continuing UL transmission in a serving cell of an MCG, in DC that includes the MCG (first base station) and an SCG (second base station). However, it is also possible, for example, to perform control in which, when detecting power sticking on an SCG between a plurality of SCGs (between a first base station and a second base station), UL transmission of another SCG is stopped (or the SCG is released).

(Communication system whole configuration, basic operation)

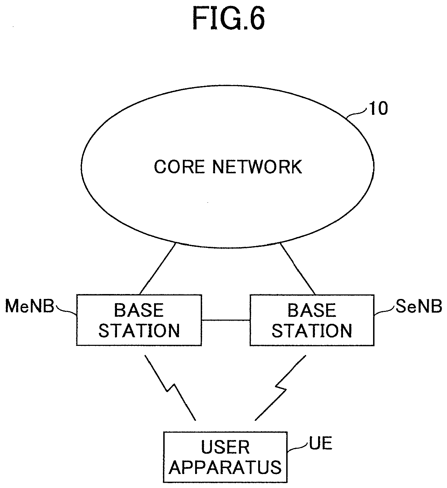

Fig. 6 shows a configuration example of a mobile communication system of an embodiment of the present invention. As shown in Fig. 6, the mobile communication system of the present embodiment includes a base station MeNB and a base station SeNB each connected to a core network 10, which enables Dual Connectivity (DC) between the base station MeNB/base station SeNB and the user apparatus UE. Also, communication is available between the base station MeNB and the base station SeNB by an X2 interface, for example.

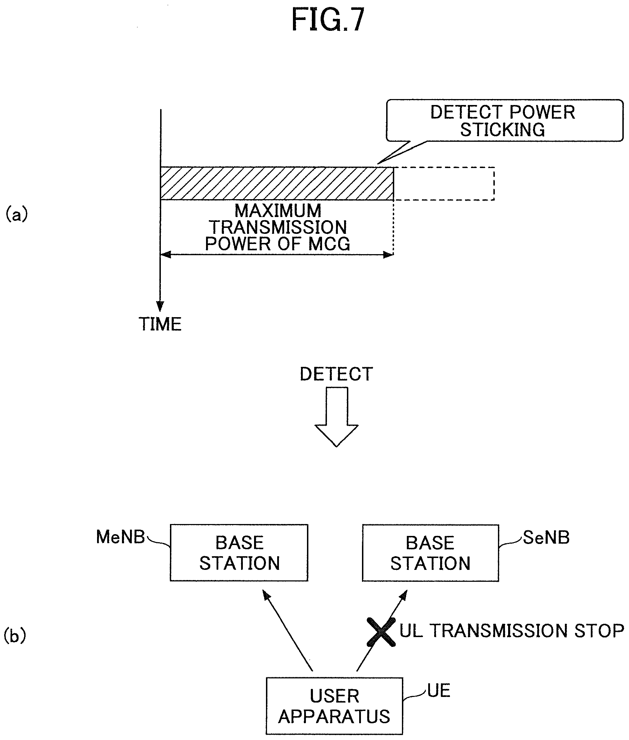

Basic operation in the present embodiment is described with reference to Fig. 7. In the present embodiment, when the user apparatus UE performs communication with the base station MeNB and the base station SeNB by DC, as shown in Fig. 4B, a maximum transmission power for each CG is set in the user apparatus UE, the base station MeNB and the base station SeNB, so that the base station MeNB performs scheduling such that the power does not exceed the maximum transmission power assigned to the MCG basically, and the base station SeNB performs scheduling such that the power does not exceed the maximum transmission power assigned to the SCG basically.

Here, as shown in Fig. 7 (a), it is assumed that a transmission power of the user apparatus UE for the MCG becomes the maximum transmission power. For example, like the situation shown in Fig. 3B, it is assumed that, although a transmission power to which a power indicated by the dotted line of Fig. 7 is added is necessary, due to restriction of the predetermined maximum transmission power, transmission is performed by the maximum transmission power.

That is, in this case, there is a possibility in that an UL signal cannot be transmitted to the base station MeNB due to lack of transmission power.

Therefore, in the present embodiment, when the user apparatus UE detects that the transmission power of the MCG becomes the maximum transmission power (it can be rephrased by "when detecting power sticking"), the user apparatus UE stops UL transmission to the base station SeNB as shown in Fig. 7(b). As to stop of UL transmission, for example, UL transmission is caused to stop by releasing the SCG (or an SCell). It is also possible simply not to perform UL transmission in the SCG while keeping the SCG. Also, SCell(s) including UL in the SCG may be deactivated. Both of the release of the SCG and deactivation of the SCell are included in "stop of UL transmission".

After stopping UL transmission of the SCG, for example, the user apparatus UE can perform UL transmission in the MCG using a transmission power that is greater than the configured MCG maximum transmission power (and that is equal to or less than the maximum transmission power of the UE).

Also, in a case where the transmission power of the MCG temporarily reaches the maximum transmission power, it can be considered that the UL transmission power in the MCG side will become enough soon. So, there is a possibility in that stop of UL transmission for the SCG is performed although stop of UL transmission for the SCG is not necessary.

Therefore, when the user apparatus UE detects power sticking of the MCG continuously for a predetermined time length (time to trigger), the user apparatus UE may perform UL transmission stop in a serving cell of the SCG. Also, when power sticking is detected equal to or greater than a predetermined number of times within a predetermined period, UL transmission stop in a serving cell of the SCG may be performed. These operations can be similarly performed in the after-mentioned examples.

Also, as described above, instead of performing release of SCG while keeping connection to the MCG as described above, the user apparatus UE may once disconnect connections with the MCG and the SCG, so that the user apparatus UE may reconnect to the base station MeNB.

By stopping UL transmission to the base station SeNB by the user apparatus UE, ACK for downlink reception and the like cannot be transmitted. Thus, as a result, DL reception also stops.

The above-mentioned control is a control in which Dual connectivity to the base station MeNB and the base station SeNB changes to single connectivity to the base station MeNB. Thus, this control may be referred to as "to fallback to Single connectivity".

As mentioned above, by performing stop of UL transmission in the SCG side, it becomes possible to avoid deterioration of connectivity due to lack of transmission power in the MCG side and to provide an important service. In the following, examples of more concrete processing are described in the present embodiment.

(Control on a specific channel)

The trigger of UL transmission stop in a serving cell of the SCG may be detection of power sticking of the MCG irrespective of what channel is UL-transmitted in the MCG side. Alternatively, the trigger of UL transmission stop of the SCG may be detection of power sticking of the MCG when transmitting a specific channel.

As the specific channel, there is a PRACH (Physical Random Access Channel), for example. Generally, when the user apparatus UE has no resource for UL data communication, the user apparatus UE transmits a PRACH to the base station to request a resource, and receives assignment of a resource by receiving an UL Grant from the base station to perform UL transmission (example: measurement report transmission). In DC, it is assumed that the base station MeNB performs management and configuration of measurement in an RRC connected state. Thus, when a measurement report is not transmitted to the base station MeNB, the base station MeNB cannot properly perform control of handover, and the like.

As mentioned above, since it is important to always enable the user apparatus UE to transmit a PRACH to the base station MeNB, the PRACH is taken as the specific channel. Of course, the specific channel is not limited to the PRACH. For example, PUCCH, PUSCH, or SRS(Sounding Reference Symbol) may be used as the specific channel.

As mentioned above, by limiting the trigger of UL transmission stop of the SCG to a specific channel, complexity of implementation of the user apparatus UE can be decreased.

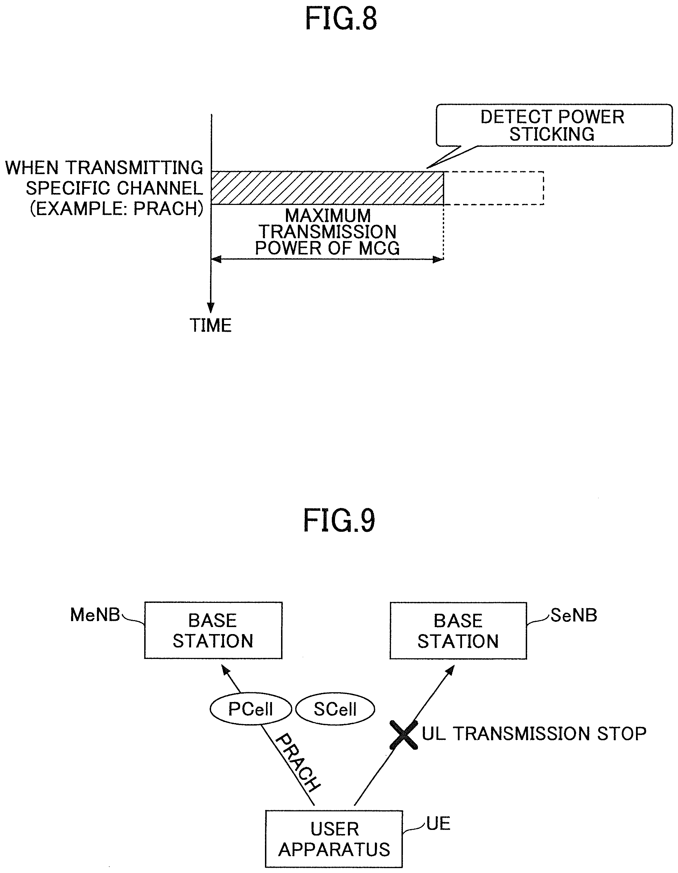

Operation of the user apparatus UE when the PRACH is used as the specific channel is described with reference to Fig. 8. As shown in Fig. 8, when the user apparatus UE is transmitting a PRACH, the user apparatus UE stops UL transmission in a serving cell of the SCG being triggered by detection of MCG power sticking, so that, for example, the user apparatus UE performs transmission of the PRACH using a transmission power including a power of the part of dotted line shown in Fig. 8.

In the case where a PRACH is used as the specific channel, although a PRACH can be transmitted in both of a PCell and an SCell in the MCG, only a PRACH in the PCell, which is more important, may be targeted. That is, when the user apparatus UE is transmitting a PRACH in the PCell of the MCG, the user apparatus UE may stop UL transmission of the SCG being triggered by detection of MCG power sticking.

(On restriction of UL transmission)

When UL transmission stop of the SCG is performed, as to serving cells in the MCG, UL transmission may be performed only in a cell where a PRACH is transmitted. In this case, the trigger of UL transmission stop of the SCG is not limited to a PRACH, and other channels may be used. Also, a trigger not limited to a specific channel may be used. Fig. 9 shows an example of a case where UL transmission is performed only in a cell where a PRACH is transmitted. In the example of Fig. 9, the MCG includes a PCell and an SCell, which are configured such that a PRACH is transmitted only in the PCell without transmitting a PRACH in the SCell. Thus, as shown in Fig. 9, when UL transmission of the SCG is stopped, UL transmission is performed only in the PCell of the MCG. By the way, this is merely an example, and, in a case where a PRACH is transmitted by the SCell without transmitting a PRACH by the PCell, UL transmission may be performed only in the SCell.

As to UL transmission stop in a cell where a PRACH is not transmitted, the user apparatus UE may simply not perform UL transmission in the cell. Also, when the cell is an SCell, the user apparatus UE may deactivate or release (delete) the SCell. Also, the user apparatus UE may stop a TA (Time Alignment) timer related to the cell where a PRACH is not transmitted.

(Process sequence example)

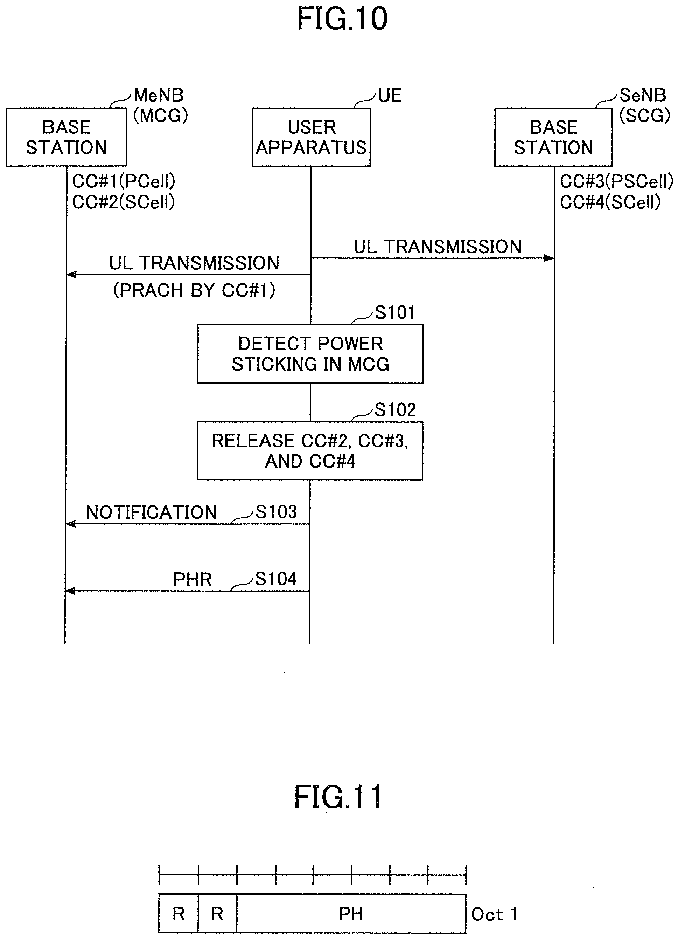

Next, with reference to Fig. 10, a sequence example of processing between the user apparatus UE and the base station MeNB/SeNB on UL transmission stop of the SCG is described.

In the example of Fig. 10, at least on UL, the MCG includes a CC1 corresponding to a PCell and a CC2 corresponding to an SCell, and the SCG includes a CC3 corresponding to a PSCell and a CC4 corresponding to an SCell. Also, the MCG is configured such that a PRACH is transmitted only by the CC1, and it is assumed that, when UL transmission of the SCG is stopped, UL transmission is performed only in a CC that transmits a PRACH in the MCG.

First, the user apparatus UE is performing UL transmission by DC. That is, the user apparatus UE is performing UL transmission by both of the MCG and the SCG.

In step 101, the user apparatus UE detects that power sticking occurs in UL transmission power of the MCG. Being triggered by the detection in step 101, in step 102, the user apparatus UE stops UL transmission in the SCG and stops UL transmission in the CC2 of the MCG (CC where a PRACH is not transmitted). As the stop of UL transmission, in this example, the CC2, the CC3 and the CC4 are released (deleted).

Also, in this example, being triggered by UL transmission stop, this event is notified to the base station MeNB (step 103). For the notification, a MAC signal may be used, or notification may be performed by an RRC message for a base station to which the user apparatus UE is RRC-connected. Also, in the example of Fig. 10, since the SCG is released, notification to the base station SeNB is not performed. Alternatively, right before the user apparatus UE releases the SCG (or SCell) (stops UL transmission), the user apparatus UE may also notify the base station SeNB of the stop of UL transmission.

By performing notification of UL transmission stop as mentioned above, the base station MeNB/SeNB can stop UL resource assignment operation in the corresponding CC, for example. Also, in a case where the user apparatus UE releases a CC, the base station MeNB/SeNB can also ascertain that the CC has been released, so that the base station MeNB/SeNB can perform operation to delete the CC from management, for example.

Also, in the example of Fig. 10, a PHR is transmitted to the base station MeNB being triggered by occurrence of UL transmission stop (step 104). In the example of Fig. 10, since the SCG is released, PHR transmission to the base station SeNB is not performed. Alternatively, right before the user apparatus UE releases the SCG (stops UL transmission), the user apparatus UE may also transmit a PHR to the base station SeNB.

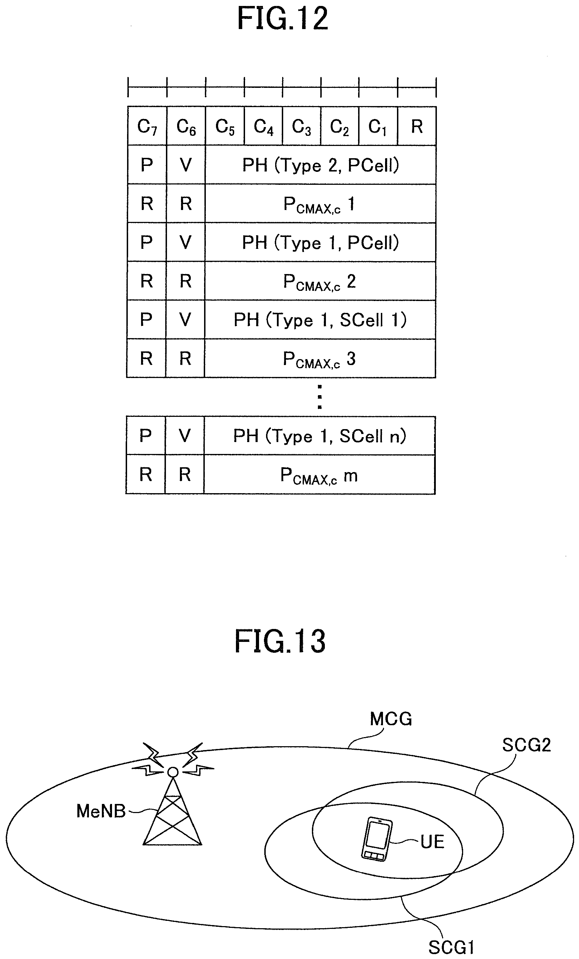

In a case where the number of CC that remains unreleased is one, the format (signal) of the PHR can be an MAC Control Element for storing information of one CC (refer to non-patent document 2) as shown in Fig. 11. Also, an MAC Control Element shown in Fig. 12 including information of all active CCs before occurrence of UL transmission stop may be used (refer to non-patent document 2).

(On a case where CGs equal to or greater than three are configured)

For example, as shown in Fig. 13, it can be considered to use DC that uses one MCG and two (or equal to or greater than two) SCGs. In this case, UL transmission stop may be performed in a stepwise manner. For example, when 3CGs are configured, UL transmission stop may be performed in a stepwise manner, like 3CG=>2CG=>1CG. Accordingly, it is possible to avoid releasing CGs unnecessarily.

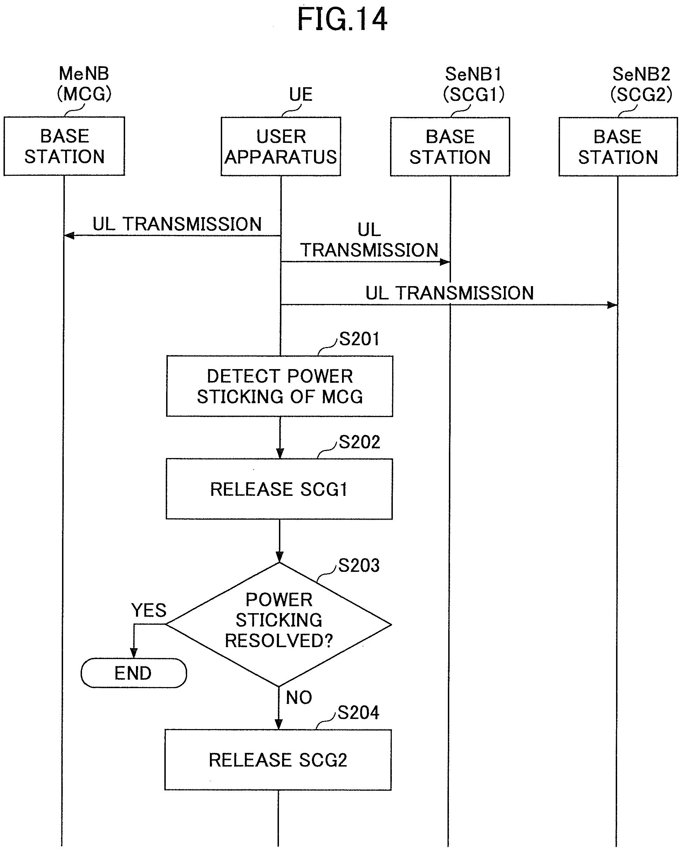

Fig. 14 shows an operation example in a case where 3CGs are configured. Like the case shown in Fig. 13, Fig. 14 shows a case where 3CGs of an MCG, an SCG1 and an SCG2 are configured in the user apparatus UE. Also, in this case, in execution of DC, it is assumed that a maximum transmission power is assigned for each CG. For example, here, it is assumed that, the whole power is 10, 5 is assigned to the MCG, 3 is assigned to the SCG1 and 2 is assigned to the SCG2.

As shown in Fig. 14, when the user apparatus UE is performing UL transmission in each CG, the use apparatus UE detects power sticking of UL transmission power of the MCG (detects that UL transmission power of the MCG becomes the MCG assignment maximum transmission power 5) (step 201). Thus, first, the user apparatus UE performs UL transmission stop for the SCG1 (release SCG1) (step 202). As to order of SCG in which UL transmission stop is performed in the plurality of SCGs, the order may be predetermined, the order may be configured by an RRC signaling from the base station MeNB, or, UL transmission stop may be performed from an SCG of large UL transmission power first.

As a result of release of the SCG1, assignment of the maximum transmission power becomes 8 for the MCG and 2 for the SCG2. In step 203, the user apparatus UE determines whether power sticking of the MCG is resolved (whether power sticking does not occur) by this assignment. When it is resolved, the process ends, and when it is not resolved (when power sticking occurs), release (UL transmission stop) of the SCG2 is performed in step 204.

(Apparatus configuration, operation flow)

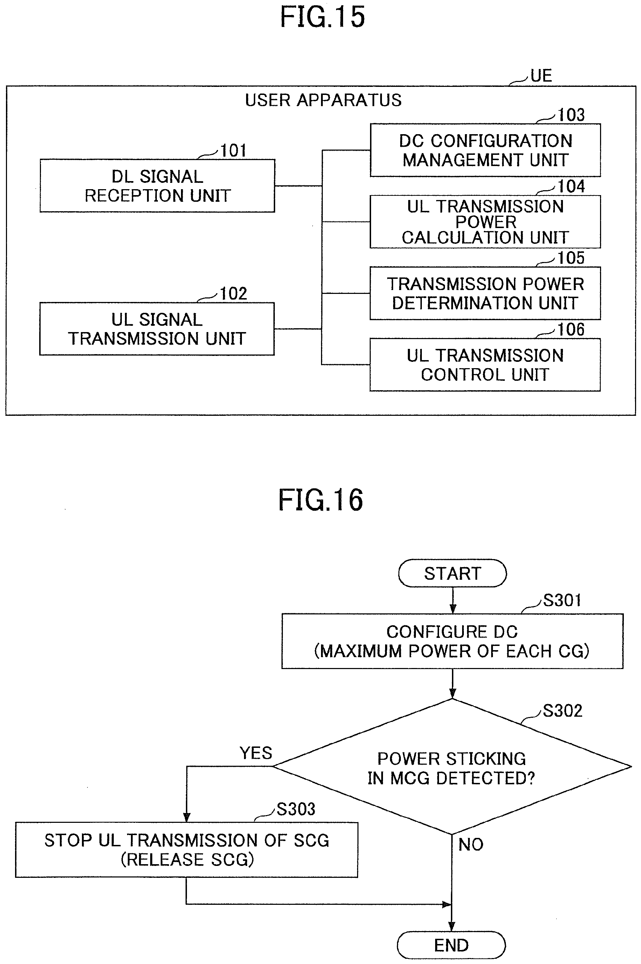

Fig. 15 shows a configuration example of the user apparatus UE that executes operation described so far. Fig. 15 only shows functional units especially related to the embodiment of the present invention in the user apparatus UE, and the user apparatus UE also includes at least functions, not shown in the figure, for performing operation complying with LTE.

As shown in Fig. 15, the user apparatus UE of the present embodiment includes a DL signal reception unit 101, an UL signal transmission unit 102, a DC configuration management unit 103, an UL transmission power calculation unit 104, a transmission power determination unit 105 and an UL transmission control unit 106.

The DL signal reception unit 101 receives a radio signal from a base station (MeNB, SeNB) to extract information from the radio signal. The UL signal transmission unit 102 generates a radio signal from transmission information to transmit it to the base station (MeNB, SeNB). The DC configuration management unit 103 performs management (holding identification information and state of configured CCs, and the like), addition, deletion, activation, deactivation and the like for each cell (CC) that forms the DC. Also, the DC configuration management unit 103 holds (stores) maximum transmission power assignment information for each CG. The maximum transmission power assignment information for each CG is notified to the user apparatus UE from the base station MeNB or SeNB semistatically, for example.

The UL transmission power calculation unit 104 calculates UL transmission for each CG, and instructs the UL signal transmission unit 102 to perform UL transmission with the calculated UL transmission power. A transmission power of a CG can be calculated as a sum of transmission powers of CCs that form the CG. By the way, in the present embodiment, as shown in Fig. 4B, a maximum transmission power is set for each CG. Thus, for example, in a case where, as a result of calculating an UL transmission power by using an equation of the lower side of the equation 1, the UL transmission power exceeds the maximum transmission power, the user apparatus UE performs UL transmission using the maximum transmission power in principle. However, as described so far, by performing UL transmission stop of the SCG, UL transmission with a transmission power exceeding the maximum transmission power can be performed for the MCG. For example, the UL transmission power calculation unit 104 receives, from the UL transmission control unit 106, notification that UL transmission of the SCG stops, so that the UL transmission power calculation unit 104 instructs the UL signal transmission unit 102 to perform UL transmission of the MCG using a transmission power exceeding the MCG maximum transmission power based on the notification.

The transmission power determination unit 105 determines whether the transmission power of the MCG becomes the maximum transmission power, that is, whether power sticking occurs, based on the UL transmission power calculated by the UL transmission power calculation unit 104 and the maximum transmission power held in the DC configuration management unit 103. In this determination, as described before, it may be determined that the transmission power becomes the maximum transmission power continuously for a predetermined period, or the transmission power becomes the maximum transmission power equal to or greater than a predetermined number of times within a predetermined period.

When it is determined that power sticking of the MCG occurs by the transmission power determination unit 105, the UL transmission control unit 106 performs control of UL transmission stop in a serving cell of the SCG. As the control, UL transmission control unit 106 instructs the UL signal transmission unit 102 not to perform UL transmission in a serving cell of the SCG, or instructs the DC configuration management unit 103 to release the SCG. The UL transmission control unit 106 can perform control on UL transmission stop described so far such as PHR transmission, notification of UL transmission stop event and the like.

Fig. 16 shows a flowchart of an operation example related to UL transmission stop (fallback to Single connectivity) in a serving cell of the SCG in the user apparatus UE.

The DC configuration management unit 103 of the user apparatus UE configures DC based on an RRC message received from the base station MeNB, for example (step 301). That is, an MCG and an SCG are configured. Also, here, a maximum transmission power for each CG is also configured. After that, the user apparatus UE performs UL transmission according to a transmission power that is calculated by the UL transmission power calculation unit 104 based on scheduling information and the like from the base station (MeNB, SeNB).

While performing UL transmission in this way, the transmission power determination unit 105 of the user apparatus UE determines whether power sticking of the MCG occurs (step 302). When power sticking in the MCG is detected (Yes in step 302), the UL transmission control unit 106 of the user apparatus UE performs UL transmission stop of the SCG (step 303).

It is notified to the UL transmission power calculation unit 104 that UL transmission stop of the SCG has been performed. The UL transmission power calculation unit 104 calculates, based on the notification, an UL transmission power of the MCG as a value greater than the assigned maximum transmission power, so that the user apparatus UE can perform UL transmission in a serving cell of the MCG by using the transmission power.

The configuration (function segmentation) of the apparatus shown in Fig. 15 is merely an example. The implementation method (concrete arrangement of functional units, and the like) is not limited to a specific implementation method. For example, the user apparatus of the present embodiment can be also configured as an apparatus formed by the following functional units.

That is, the user apparatus in the present embodiment can be configured as a user apparatus in a communication system including a first base station and a second base station that perform communication with the user apparatus by inter-base station carrier aggregation, including:

a maximum transmission power holding unit configured to hold a maximum transmission power that is configured beforehand for the first base station;
a transmission power determination unit configured to determine whether a transmission power that is used by the user apparatus for performing signal transmission to the first base station reaches the maximum transmission power held by the maximum transmission power holding unit; and
a transmission control unit configured, when it is determined that the transmission power reaches the maximum transmission power by the transmission power determination unit, to stop signal transmission to the second base station. According to this configuration, it becomes possible to avoid that the user apparatus UE that performs DC cannot transmit an UL signal to the base station MeNB due to lack of transmission power.

The transmission power determination unit may be configured to determine whether the transmission power reaches the maximum transmission power when the user apparatus performs signal transmission using a specific channel, and the transmission control unit may be configured to stop signal transmission to the second base station if it is determined, by the transmission power determination unit, that the transmission power reaches the maximum transmission power when the user apparatus performs signal transmission using the specific channel. According to this configuration, since it is enough to perform control limited to the specific channel, complexity of the user apparatus UE can be decreased.

The user apparatus performs signal transmission to the first base station using a plurality of component carriers, and when signal transmission to the second base station is stopped by the transmission control unit, the user apparatus may perform signal transmission to the first base station using a component carrier for performing signal transmission of a specific channel in the plurality of component carriers. According to this configuration, for example, a signal of more important channel can be transmitted to the base station MeNB with more reliability.

The specific channel is a PRACH, for example. By using the PRACH as the specific channel, PRACH transmission to the base station MeNB can be performed without fail, and important data can be transmitted to the base station MeNB.

The user apparatus performs signal transmission to the second base station using one or a plurality of component carriers forming a cell group, and the transmission control unit may stop signal transmission to the second base station by releasing the cell group. By releasing the cell group, UL transmission can be stopped efficiently.

The transmission power determination unit may determine that the transmission power reaches the maximum transmission power when detecting that the transmission power becomes the maximum transmission power continuously for a predetermined period or detecting that the transmission power becomes the maximum transmission power equal to or greater than a predetermined number of times within a predetermine period. According to this configuration, it can be avoided that UL transmission is stopped when the transmission power temporarily reaches the maximum transmission power.

When the transmission control unit stops signal transmission to the second base station, the transmission control unit may report a power headroom to the first base station or the second base station. According to this configuration, the base station (MeNB, SeNB) can ascertain pathloss and the like in a situation where maximum transmission power sticking occurs in the MCG, so that proper scheduling can be performed.

When the transmission control unit stops signal transmission to the second base station, the transmission control unit may notify the first base station or the second base station of performing the stop. According to this configuration, the base station (MeNB, SeNB) can ascertain that UL transmission stop is performed in a serving cell of the SCG and the like, so that scheduling and the like can be performed in consideration of it, for example.

The second base station includes a plurality of base stations, and the transmission control unit may stop signal transmission to the plurality of base stations in a stepwise manner for each base station when it is determined, by the transmission power determination unit, that the transmission power reaches the maximum transmission power. According to this configuration, for example, when there are a plurality of SCGs, it can be avoided that the SCGs are released unnecessarily.

The functional configuration of the user apparatus described in the present embodiment may be realized by executing a program by a CPU (processor) in the user apparatus that includes the CPU and a memory, or may be realized by hardware such as hardware circuits including logics of processing described in the present embodiment, or may be configured by coexistence of a program and hardware.

In the above, each embodiment of the present invention has been explained. However, the disclosed invention is not limited to the embodiments. Those skilled in the art will conceive of various modified examples, corrected examples, alternative examples, substituted examples, and the like. While specific numerical value examples are used to facilitate understanding of the present invention, such numerical values are merely examples, and any appropriate value may be used unless specified otherwise. Classification into each item in the description is not essential in the present invention, and features described in two or more items may be combined and used as necessary. Subject matter described in an item may be applied to subject matter described in another item (provided that they do not contradict).

It is not always true that the boundaries of the functional units or the processing units in the functional block diagram correspond to boundaries of physical components. The operations by the plural functional units may be physically performed by a single component. Alternatively, the operations by the single functional unit may be physically performed by plural components.

For convenience of explanation, the user apparatus has been explained by using functional block diagrams. However, such an apparatus may be implemented in hardware, software, or a combination thereof.

The software executed by a processor provided in the user apparatus may be stored in any proper storage medium such as a Random Access Memory (RAM), a flash memory, a Read Only Memory (ROM), an EPROM, an EEPROM, a register, a hard disk (HDD), a removable disk, a CD-ROM, a database, a server and the like.

The present invention is not limited to the above-mentioned embodiment and is intended to include various variations, modifications, alterations, substitutions and so on without departing from the scope of the attached claims.

DESCRIPTION OF REFERENCE SIGNS

MeNB, SeNB base station
UE user apparatus
101 DL signal reception unit
102 UL signal transmission unit
103 DC configuration management unit
104 UL transmission power calculation unit
105 transmission power determination unit
106 UL transmission control unit

**Claims**

1. A user apparatus in a communication system including a first base station and a second base station that perform communication with the user apparatus by inter-base station carrier aggregation, comprising:

   a maximum transmission power holding unit configured to hold a maximum transmission power that is configured beforehand;
   a transmission power determination unit (105) configured to determine whether a transmission power that is used by the user apparatus for performing signal transmission reaches the maximum transmission power held by the maximum transmission power holding unit; and
   a transmission control unit (106) configured, when it is determined that the transmission power reaches the maximum transmission power by the transmission power determination unit, to stop signal transmission to one of the first base station and the second base station,
   wherein, the user apparatus performs signal transmission to the first base station using a plurality of component carriers, and
   wherein, when signal transmission to the second base station is stopped by the transmission control unit, the user apparatus performs signal transmission to the first base station using a component carrier for performing signal transmission of a specific channel in the plurality of component carriers.

2. The user apparatus as claimed in claim 1,
   wherein the transmission power determination unit (105) determines whether the transmission power reaches the maximum transmission power when the user apparatus performs signal transmission using a specific channel, and
   wherein the transmission control unit (106) stops signal transmission to the second base station if it is determined, by the transmission power determination unit, that the transmission power reaches the maximum transmission power when the user apparatus performs signal transmission using the specific channel.

3. The user apparatus as claimed in claim 1 or 2, wherein the specific channel is a PRACH.

4. The user apparatus as claimed in any one of claims 1-3,
   wherein the user apparatus performs signal transmission to the second base station using one or a plurality of component carriers forming a cell group, and
   wherein the transmission control unit (106) stops signal transmission to the second base station by releasing the cell group.

5. The user apparatus as claimed in any one of claims 1-4, wherein the transmission power determination unit (105) determines that the transmission power reaches the maximum transmission power when detecting that the transmission power becomes the maximum transmission power continuously for a predetermined period or detecting that the transmission power becomes the maximum transmission power equal to or greater than a predetermined number of times within a predetermine period.

6. The user apparatus as claimed in any one of claims 1-5, wherein, when the transmission control unit (106) stops signal transmission to the second base station, the transmission control unit reports a power headroom to the first base station or the second base station.

7. The user apparatus as claimed in any one of claims 1-6, wherein, when the transmission control unit (106) stops signal transmission to the second base station, the transmission control unit notifies the first base station or the second base station of performing the stop.

8. The user apparatus as claimed in any one of claims 1-7, wherein the second base station includes a plurality of base stations, and the transmission control unit (106) stops signal transmission to the plurality of base stations in a stepwise manner for each base station when it is determined, by the transmission power determination unit (105), that the transmission power reaches the maximum transmission power.

9. A transmission control method executed by a user apparatus in a communication system including a first base station and a second base station that perform communication with the user apparatus by inter-base station carrier aggregation,
the user apparatus including a maximum transmission power holding unit configured to hold a maximum transmission power that is configured beforehand;
the transmission control method comprising:

a transmission power determination step (S101, S201) of determining whether a transmission power that is used by the user apparatus for performing signal transmission reaches the maximum transmission power held by the maximum transmission power holding unit; and
a transmission control step (S102; S202-S204) of, when it is determined that the transmission power reaches the maximum transmission power by the transmission power determination step, stopping signal transmission to one of the first base station and the second base station,

wherein, the user apparatus performs signal transmission to the first base station using a plurality of component carriers, and
wherein, when signal transmission to the second base station is stopped by the transmission control step, the user apparatus performs signal transmission to the first base station using a component carrier for performing signal transmission of a specific channel in the plurality of component carriers.

**Patentansprüche**

1. Benutzervorrichtung in einem Kommunikationssystem, eine erste Basisstation und eine zweite Basisstation beinhaltend, die eine Kommunikation mit der Benutzervorrichtung über eine Zwischenbasisstation-Trägeraggregation durchführen, umfassend:

eine Halteeinheit für maximale Übertragungsleistung, die konfiguriert ist, um eine maximale Übertragungsleistung zu halten, die vorher konfiguriert wurde;
eine Übertragungsleistungsbestimmungseinheit (105), die konfiguriert ist, um zu bestimmen, ob eine Übertragungsleistung, die von der Benutzervorrichtung zum Durchführen einer Signalübertragung verwendet wird, die maximale Übertragungsleistung erreicht, die von der Halteeinheit für maximale Übertragungsleistung gehalten wird; und
eine Übertragungssteuereinheit (106), die konfiguriert ist, wenn bestimmt wird, dass die Übertragungsleistung die maximale Übertragungsleistung durch die Übertragungsleistungsbestimmungseinheit erreicht, um die Signalübertragung zu einer von erster Basisstation oder zweiter Basisstation zu stoppen,
wobei die Benutzervorrichtung eine Signalübertragung an die erste Basisstation unter Verwendung einer Vielzahl von Komponententrägern durchführt, und
wobei, wenn die Signalübertragung zu der zweiten Basisstation durch die Übertragungssteuereinheit gestoppt wird, die Benutzervorrichtung eine Signalübertragung zu der ersten Basisstation unter Verwendung eines Komponententrägers zum Durchführen einer Signalübertragung eines spezifischen Kanals aus der Vielzahl von Komponententrägern durchführt.

2. Benutzervorrichtung nach Anspruch 1,
wobei die Übertragungsleistungsbestimmungseinheit (105) bestimmt, ob die Übertragungsleistung die maximale Übertragungsleistung erreicht, wenn die Benutzervorrichtung eine Signalübertragung unter Verwendung eines spezifischen Kanals durchführt, und
wobei die Übertragungssteuereinheit (106) die Signalübertragung an die zweite Basisstation stoppt, falls durch die Übertragungsleistungsbestimmungseinheit bestimmt wird, dass die Übertragungsleistung die maximale Übertragungsleistung erreicht, wenn die Benutzervorrichtung eine Signalübertragung unter Verwendung des spezifischen Kanals durchführt.

3.  Benutzervorrichtung nach Anspruch 1 oder 2, wobei der spezifische Kanal ein PRACH ist.

4.  Benutzervorrichtung nach einem der Ansprüche 1-3,
    wobei die Benutzervorrichtung eine Signalübertragung zu der zweiten Basisstation unter Verwendung eines oder einer Vielzahl von Komponententrägern durchführt, die eine Zellgruppe bilden, und
    wobei die Übertragungssteuereinheit (106) die Signalübertragung an die zweite Basisstation durch Freigeben der Zellgruppe stoppt.

5.  Benutzervorrichtung nach einem der Ansprüche 1-4, wobei die Übertragungsleistungsbestimmungseinheit (105) bestimmt, dass die Übertragungsleistung die maximale Übertragungsleistung erreicht, wenn erfasst wird, dass die Übertragungsleistung kontinuierlich für eine vorbestimmte Zeitdauer die maximale Übertragungsleistung wird, oder wenn erfasst wird, dass die Übertragungsleistung gleich oder größer als eine vorbestimmte Anzahl von Malen innerhalb einer vorbestimmten Zeitdauer die maximale Übertragungsleistung wird.

6.  Benutzervorrichtung nach einem der Ansprüche 1-5, wobei, wenn die die Übertragungssteuereinheit (106) die Signalübertragung an die zweite Basisstation stoppt, die Übertragungssteuereinheit einen Leistungsspielraum an die erste Basisstation oder die zweite Basisstation meldet.

7.  Benutzervorrichtung nach einem der Ansprüche 1-6, wobei, wenn die Übertragungssteuereinheit (106) die Signalübertragung an die zweite Basisstation stoppt, die Übertragungssteuereinheit der ersten Basisstation oder der zweiten Basisstation die Durchführung des Stopps meldet.

8.  Benutzervorrichtung nach einem der Ansprüche 1-7, wobei die zweite Basisstation eine Vielzahl von Basisstationen beinhaltet und die Übertragungssteuereinheit (106) die Signalübertragung an die Vielzahl von Basisstationen für jede Basisstation schrittweise stoppt, wenn durch die Übertragungsleistungsbestimmungseinheit (105) bestimmt wird, dass die Übertragungsleistung die maximale Übertragungsleistung erreicht.

9.  Übertragungssteuerverfahren, das durch eine Benutzervorrichtung in einem Kommunikationssystem ausgeführt wird, eine erste Basisstation und eine zweite Basisstation beinhaltend, die eine Kommunikation mit der Benutzervorrichtung über eine Zwischenbasisstation-Trägeraggregation durchführen,
    wobei die Benutzervorrichtung eine Halteeinheit für maximale Übertragungsleistung beinhaltet, die konfiguriert ist, um eine maximale Übertragungsleistung zu halten, die vorher konfiguriert wurde;
    wobei das Übertragungssteuerverfahren umfasst:

    einen Übertragungsleistungsbestimmungsschritt (S101, S201) zum Bestimmen, ob eine Übertragungsleistung, die von der Benutzervorrichtung zum Durchführen der Signalübertragung verwendet wird, die maximale Übertragungsleistung erreicht, die von der Halteeinheit für maximale Übertragungsleistung gehalten wird; und
    einen Übertragungssteuerschritt (S102; S202-S204), um die Signalübertragung, wenn bestimmt wird, dass die Übertragungsleistung die maximale Übertragungsleistung durch den Übertragungsleistungsbestimmungsschritt erreicht, zu einer von erster Basisstation oder zweiter Basisstation zu stoppen,
    wobei die Benutzervorrichtung eine Signalübertragung an die erste Basisstation unter Verwendung einer Vielzahl von Komponententrägern durchführt, und
    wobei, wenn die Signalübertragung zu der zweiten Basisstation durch den Übertragungssteuerschritt gestoppt wird, die Benutzervorrichtung eine Signalübertragung zu der ersten Basisstation unter Verwendung eines Komponententrägers zum Durchführen einer Signalübertragung eines spezifischen Kanals aus der Vielzahl von Komponententrägern durchführt.

**Revendications**

1.  Dispositif d'utilisateur dans un système de communication mobile incluant une première station de base et une seconde station de base qui effectue une communication avec le dispositif d'utilisateur par agrégation de porteuses de stations de base, comprenant :

    une unité de maintien d'une puissance de transmission maximale configurée pour maintenir une puissance de transmission maximale qui est prédéfinie ;

une unité de détermination de la puissance de transmission (105) configurée pour déterminer si une puissance de transmission qui est utilisée par le dispositif d'utilisateur pour effectuer une transmission de signal atteint la puissance de transmission maximale maintenue par l'unité de maintien de puissance de transmission maximale ; et

une unité de commande des transmissions (106) configurée, quand l'unité de détermination de la puissance de transmission détermine que la puissance de transmission atteint la puissance de transmission maximale, pour arrêter la transmission de signal vers l'une de la première station de base et de la seconde station de base, dans lequel, le dispositif d'utilisateur effectue une transmission de signal vers la première station de base en utilisant une pluralité de porteuses composantes, et

dans lequel, quand une transmission de signal vers la seconde station de base est arrêtée par l'unité de commande des transmissions, le dispositif d'utilisateur effectue une transmission de signal vers la première station de base en utilisant une porteuse composante pour effectuer une transmission de signal d'un canal spécifique dans la pluralité de porteuses composantes.

2. Dispositif d'utilisateur selon la revendication 1,
dans lequel l'unité de détermination de la puissance de transmission (105) détermine si la puissance de transmission atteint la puissance de transmission maximale quand le dispositif d'utilisateur effectue une transmission de signal en utilisant un canal spécifique, et

dans lequel l'unité de commande des transmissions (106) arrête la transmission de signal vers la seconde station de base si l'unité de détermination de la puissance de transmission détermine que la puissance de transmission atteint la puissance de transmission maximale quand le dispositif d'utilisateur effectue une transmission de signal en utilisant le canal spécifique.

3. Dispositif d'utilisateur selon la revendication 1 ou 2, dans lequel le canal spécifique est un PRACH.

4. Dispositif d'utilisateur selon l'une quelconque des revendications 1-3,
dans lequel le dispositif d'utilisateur effectue une transmission de signal vers la seconde station de base en utilisant une seule ou une pluralité de porteuses composantes formant un groupe de cellules, et

dans lequel l'unité de commande des transmissions (106) arrête la transmission de signal vers la seconde station de base en libérant le groupe de cellules.

5. Dispositif d'utilisateur selon l'une quelconque des revendications 1-4, dans lequel l'unité de détermination de la puissance de transmission (105) détermine que la puissance de transmission atteint la puissance de transmission maximale en détectant que la puissance de transmission devient la puissance de transmission maximale de façon continue pendant une période prédéterminée ou en détectant que la puissance de transmission devient la puissance de transmission maximale un nombre prédéterminé de fois égal ou supérieur dans les limites d'une période prédéterminée.

6. Dispositif d'utilisateur selon l'une quelconque des revendications 1-5, dans lequel, quand l'unité de commande des transmissions (106) arrête la transmission de signal vers la seconde station de base, l'unité de commande des transmissions rapporte une réserve de puissance à la première station de base ou à la seconde station de base.

7. Dispositif d'utilisateur selon l'une quelconque des revendications 1-6, dans lequel, quand l'unité de commande des transmissions (106) arrête la transmission de signal vers la seconde station de base, l'unité de commande des transmissions notifie à la première station de base ou à la seconde station de base d'effectuer l'arrêt.

8. Dispositif d'utilisateur selon l'une quelconque des revendications précédentes 1-7, dans lequel la seconde station de base inclut une pluralité de stations de base et l'unité de commande des transmissions (106) arrête la transmission de signal vers la pluralité de stations de base d'une façon point par point pour chaque station de base quand l'unité de détermination de la puissance de transmission (105) détermine que la puissance de transmission atteint la puissance de transmission maximale.

9. Procédé de commande des transmissions exécuté par un dispositif d'utilisateur dans un système de communication mobile incluant une première station de base et une seconde station de base qui effectuent une communication avec le dispositif d'utilisateur par agrégation de porteuses entre stations de base,
le dispositif d'utilisateur incluant une unité de maintien de puissance de transmission maximale configurée pour maintenir une puissance de transmission maximale qui est prédéfinie ;

le procédé de commande des transmissions comprenant :

une étape de détermination de la puissance de transmission (S101, S201) consistant à déterminer si une puissance de transmission qui est utilisée par le dispositif d'utilisateur pour effectuer une transmission de signal atteint la puissance de transmission maximale maintenue par l'unité de maintien de puissance de transmission maximale ; et

une étape de commande de transmission (S102 ; S202-S204) consistant à, quand l'étape de détermination de la puissance de transmission détermine que la puissance de transmission atteint la puissance de transmission maximale, arrêter la transmission de signal vers l'une de la première station de base et de la seconde station de base,

dans lequel, le dispositif d'utilisateur effectue une transmission de signal vers la première station de base en utilisant une pluralité de porteuses composantes, et

dans lequel, quand la transmission de signal vers la seconde station de base est arrêtée par l'étape de commande des transmissions, le dispositif d'utilisateur effectue une transmission de signal vers la première station de base en utilisant une porteuse composante pour effectuer une transmission de signal d'un canal spécifique dans la pluralité de porteuses composantes.

# FIG.1

USER APPARATUS
~UE

CC#1

CC#2

eNB

# FIG.2

USER APPARATUS
~UE

CC#1

Master-eNB(MeNB)

CC#2

Secondary-eNB(SeNB)

# FIG.3A

$P_{CMAX}$

PH

$P_{PUSCH}$

0

# FIG.3B

−PH

$P_{CMAX}$

$P_{PUSCH}$

0

# FIG.4A

MAXIMUM TRANSMISSION
POWER PER UE

ASSIGNMENT
FOR MCG

POWER STICKING

TIME

ASSIGNMENT
FOR SCG

WHEN MAXIMUM TRANSMISSION
POWER OF CG IS NOT PROVIDED

# FIG.4B

MAXIMUM TRANSMISSION
POWER PER UE

MAXIMUM TRANSMISSION
POWER OF MCG

MAXIMUM TRANSMISSION
POWER OF SCG

ASSIGNMENT
FOR MCG

TIME

ASSIGNMENT
FOR SCG

WHEN MAXIMUM TRANSMISSION
POWER OF CG IS PROVIDED

# FIG.5

MCG

MeNB

SCG

NOT REACH
BY MAXIMUM
TRANSMISSION
POWER OF MCG

UE

UE

REACH BY MAXIMUM
TRANSMISSION POWER
OF MCG

17

# FIG.6

# FIG.7

(a)

DETECT POWER STICKING

MAXIMUM TRANSMISSION POWER OF MCG

TIME

DETECT

(b)

MeNB — BASE STATION

BASE STATION — SeNB

UL TRANSMISSION STOP

USER APPARATUS — UE

# FIG.8

WHEN TRANSMITTING
SPECIFIC CHANNEL
(EXAMPLE: PRACH)

DETECT POWER
STICKING

MAXIMUM
TRANSMISSION
POWER OF MCG

TIME

# FIG.9

MeNB — BASE STATION

BASE STATION — SeNB

PCell    SCell

PRACH

UL TRANSMISSION STOP

USER
APPARATUS — UE

# FIG.10

# FIG.11

# FIG.12

| $C_7$ | $C_6$ | $C_5$ | $C_4$ | $C_3$ | $C_2$ | $C_1$ | R |
|---|---|---|---|---|---|---|---|
| P | V | PH (Type 2, PCell) | | | | | |
| R | R | $P_{CMAX,c}$ 1 | | | | | |
| P | V | PH (Type 1, PCell) | | | | | |
| R | R | $P_{CMAX,c}$ 2 | | | | | |
| P | V | PH (Type 1, SCell 1) | | | | | |
| R | R | $P_{CMAX,c}$ 3 | | | | | |

:

| P | V | PH (Type 1, SCell n) | | | | | |
|---|---|---|---|---|---|---|---|
| R | R | $P_{CMAX,c}$ m | | | | | |

# FIG.13

# FIG.14

| MeNB (MCG) | UE | SeNB1 (SCG1) | SeNB2 (SCG2) |
|------------|-----|--------------|--------------|
| BASE STATION | USER APPARATUS | BASE STATION | BASE STATION |

UL TRANSMISSION

UL TRANSMISSION

UL TRANSMISSION

S201
DETECT POWER STICKING OF MCG

S202
RELEASE SCG1

S203
POWER STICKING RESOLVED?

YES

END

NO

S204
RELEASE SCG2

# FIG.15

USER APPARATUS ⟋UE

DL SIGNAL
RECEPTION UNIT ⟋101

UL SIGNAL
TRANSMISSION UNIT ⟋102

DC CONFIGURATION
MANAGEMENT UNIT ⟋103

UL TRANSMISSION
POWER
CALCULATION UNIT ⟋104

TRANSMISSION POWER
DETERMINATION UNIT ⟋105

UL TRANSMISSION
CONTROL UNIT ⟋106

# FIG.16

START

CONFIGURE DC
(MAXIMUM POWER OF EACH CG) ⟋S301

POWER STICKING
IN MCG DETECTED? ⟋S302

YES

STOP UL TRANSMISSION OF SCG
(RELEASE SCG) ⟋S303

NO

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014036734 A1

**Non-patent literature cited in the description**

- *3GPP TR 36.842 V12.0.0,* December 2013
- *3GPP TS 36.321 V12.1.0,* March 2014